# EUROPÄISCHE PATENTSCHRIFT

(11) **EP 1 290 106 B1**
(45) Veröffentlichungstag und Bekanntmachung des Hinweises auf die Patenterteilung: **12.08.2009**
(21) Anmeldenummer: 01936299.5
(22) Anmeldetag: 30.04.2001
(51) Int. Cl.: C09K 3/16, C08K 5/42

(54) **ANTISTATIKUM**
ANTISTATIC AGENT
SUBSTANCES ANTISTATIQUES

(30) Priorität: 12.05.2000 DE 10034945; 27.12.2000 DE 10065439
(43) Veröffentlichungstag der Anmeldung: 12.03.2003
(73) Patentinhaber: Bayer MaterialScience AG, 51368 Leverkusen (DE)
(72) Erfinder: DÖBLER, Martin, 40593 Düsseldorf (DE); KÖHLER, Walter, 47239 Duisburg (DE); NEUMANN, Siegfried, 47918 Tönisvorst (DE)
(86) Internationale Anmeldenummer: PCT/EP2001/004845
(87) Internationale Veröffentlichungsnummer: WO 2001/085869

(56) Entgegenhaltungen:
- EP-A- 0 873 986
- WO-A-01/12713
- WO-A-01/25326
- DE-A- 2 506 726
- US-A- 5 910 517

## Beschreibung

Die Anmeldung betrifft Formmassen aus speziellen quartemären Ammoniumsalze von Perfluoralkylsulfonsäuren und Thermoplasten, welche antistatisch wirken und bei der Verarbeitung keine Vergilbung zeigen.

Bei Kunststoffformkörpern ist die Anlagerung von Staub unter Ausbildung von Staubfiguren ein weit verbreitetes Problem. Siehe hierzu z.B. Saechtling, Kunststoff-Taschenbuch, 26. Ausgabe, Hanser Verlag, 1995, München, S. 140 f. Besonders störend und die Funktion einschränkend sind Staubablagerungen bei transparenten Formkörpern. Solche Formkörper werden zum Beispiel für den Bereich optische Datenspeicher, Elektrotechnik, Automobilbau, im Bausektor, für Flüssigkeitsbehälter oder für andere optische Anwendungen eingesetzt. Für all diese Anwendungen ist eine Staubanlagerung unerwünscht und kann die Funktion beeinträchtigen.

Eine bekannte Methode die Staubanlagerung auf Kunststoffkörpern zu vermindern ist der Einsatz von Antistatika. In der Literatur sind für Thermoplasten Antistatika beschrieben (siehe z.B. Gächter, Müller, Plastic Additives, Hanser Verlag, München, 1996, S. 749 ff), welche die Staubanlagerung einschränken. Diese Antistatika verbessern die elektrische Leitfähigkeit der Kunststoffformmassen und leiten so Oberflächenladungen, welche sich bei der Herstellung und beim Gebrauch bilden ab. Somit werden Staubpartikel weniger angezogen und folglich gibt es eine geringere Staubanlagerung.

Bei den Antistatika unterscheidet man im allgemeinen zwischen internen und externen Antistatika. Ein externes Antistatikum wird nach der Verarbeitung auf den Kunststoffformkörper aufgetragen, ein internes Antistatikum wird als Additiv den Kunststoffformmassen zugesetzt. Aus wirtschaftlichen Gründen ist die Verwendung von internen Antistatika meist wünschenswert, da keine weiteren Arbeitsschritte zur Auftragung des Antistatikums nach der Verarbeitung nötig sind.

Die in der Literatur bislang für Thermoplasten beschriebene internen Antistatika haben meist einen oder mehrere der folgenden Nachteile:
- Molekulargewichtsabbau des Thermoplasten
- Wirksamkeit erst bei hohen Konzentrationen (>0.5 %)
- Trübung in transparenten Thermoplasten
- Nicht genügend wirksam um elektrostatische Entladung z.B. nach dem Verspritzen zu ermöglichen und damit Staubanlagerung zu vermeiden
- Verfärbungen

Eine häufig beschriebene Stoffklasse von Antistatika in Thermoplasten sind die Sulfonsäuresalze. Z.B. beschreibt JP-06 228 420 A 940 816 aliphatische Sulfonsäureammoniumsalze in Polycarbonat als Antistatikum. Diese Verbindungen führen jedoch zu Molekulargewichtsabbau.

Quarternäre Ammoniumsalze von Perfluoralkylsulfonsäuren sind bekannt, ebenso deren Verwendung in Thermoplasten, wie z.B. in DE 2 506 726. In dieser Anmeldung werden quaternäre Ammoniumsalze von Perfluoralkylsulfonsäuren als Entformungsmittel für Polycarbonat beschrieben. Die in dieser Anmeldung beschrieben Beispiele führen jedoch in Polycarbonat zu einer deutlichen Gelbfärbung beim Verarbeiten, was insbesondere für transparente und weißeingefärbte Einstellungen unerwünscht ist.

WO 01/25326, ein Dokument gemäß Art. 54(3) EPÜ beschreibt antistatische Zusammensetzungen enthaltend ein Schmelzeblend aus wenigstens einem ionischen Salz bestehend aus einem Stickstoff -Onium -Ion und einem fluororganischem Anion.

WO 01 /12713, ebenfalls ein Dokument gemäß Art. 54(3) EPÜ, beschreibt die Verwendung von fluorierten Alkylsulfonsäuresalzen als Antistatikum in Kunststoffen, sowie Kunststoffe enthaltend diese, sowie Formkörper hieraus. Weder in WO 01/25323 noch in WO 01/12713 werden die hier beanspruchten quaternären Ammoniumsalze beschrieben.

Aufgabe der Erfindung ist daher die Bereitstellung von Antistatika, die die Materialeigenschaften von Kunststoffen nicht negativ beeinflussen.

Es wurde überraschend gefunden, dass sich bestimmte Perfluoralkylsulfonsäuresalze als Antistatika besonders gut zur Herstellung von gespritzten und extrudierten Formkörpern eignen. Schon mit geringen Mengen Perfluoralkylsulfonsäuresalz lassen sich Formkörper herstellen die keinen Staub mehr anlagern und dennoch keinen der eingangs erwähnten Nachteile herkömmlicher Antistatika aufweisen gGegenstand der vorliegenden Erfindung ist daher die Verwendung der folgenden quaternären Ammoniumsalze zur antistatischen Ausrüstung von Kunststoffen, bevorzugt von Polycarbonat oder Copolycarbonatzuwsammensetzungen, Perfluoroctansulfonsäuretetrapropylammoniumsalz, Perfluorbutansulfonsäuretetrapropylammoniumsalz, Perfluoroctansulfonsäuretetrabutylammoniumsalz, Perfluorbutansulfonsäuretetrabutylammoniumsalz, Perfluoroctansulfonsäuretetrapentylammoniumsalz, Perfluorbutansulfonsäuretetrapentylammoniumsalz, Perfluoroctansulfonsäuretetrahexylammoniumsalz, Perfluorbutansulfonsäuretetrahexylammoniumsalz, N-Methyl-tripropylammoniumperfluorbutylsulfonat, N-Ethyl-tripropylammoniumperfluorbutylsulfonat, Tetrapropylammoniumperfluorbutylsulfonat, Dimethyldiisopropylammoniumperfluorbutylsulfonat, N-Methyl-tributylammoniumperfluorbutylsulfonat, Cyclohexyldiethylmethylammoniumperfluorbutylsulfonat, Cyclohexyltrimethylammoniumperfluorbutylsulfonat, N-Methyl-tripropylammoniumperfluoroctylsulfonat, N-Ethyl-tripropylammoniumperfluoroctylsulfonat, Tetrapropylammoniumperfluoroctylsulfonat, Dimethyldiisopropylammoniumperfluoroctylsulfonat, N-Methyl-tributylammoniumperfluoroctylsulfonat, Cyclohexyldiethylmethylammoniumperfluoroctylsulfonat, Cyclohexyltrimethylammoniumperfluoroctylsulfonat allein oder Mischungen davon, sowie Kunststoffzusammensetzungen, bevorzugt Polycarbonat oder Copolycarbonat enthaltend mindestens ein quaternäres Ammoniumsalz, wie oben genannt..

Optional sind weitere üblicherweise verwendete Polymeradditive in den erfindungsgemäßen Kunststoffformmassen enthalten.

Bevorzugt sind auch Mischungen von Sulfonsäuresalzen, insbesondere der oben genannten Sulfonsäuresalze.

Besonders bevorzugt sind N-Methyltripropylammoniumperfluorobutylsulfonate, N-Ethyltripropylammoniumperfluorobutylsulfonate, Dimethyldiisopropylammoniumperfluorobutylsulfonate, Methylethyldiisopropylammoniumperfluorobutylsulfonate, N-Methyltributylammoniumperfluorbutylsulfonat, allein oder Mischungen davon.

Die Perfluoralkylsulfonsäureammoniumsalze sind bekannt oder können nach bekannten Methoden hergestellt werden. Die Salze der Sulfonsäuren lassen sich durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE 1 966 931 und NL 7 802 830.

Die Perfluoralkylsulfonsäureammoniumsalze werden vorzugsweise in Mengen von 0.001 bis 2 Gew.%, bevorzugt von 0.1 bis 1 Gew.% den Kunststoffen zugesetzt.

Im Sinne der Erfindung geeignete Thermoplaste sind insbesondere transparente Thermoplaste, bevorzugt die Polymerisate von ethylenisch ungesättigten Monomeren und/oder Polykondensate von bifunktionellen reaktiven Verbindungen, zu verstehen.

Besonders geeignete Kunststoffe sind Polycarbonate oder Copolycarbonate auf Basis von Diphenolen, der Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET) oder glycol-modifiziertes PET (PETG).

Insbesonders bevorzugt sind Polycarbonate oder Copolycarbonate, insbesondere nicht halogenierten Polycarbonate und/oder Copolycarbonate mit Molekulargewichten M̅_{W} von 500 bis 100 000, bevorzugt von 10 000 bis 50 000, besonders bevorzugt von 15 000 bis 40 000.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die erfindungsgemäßen Polycarbonate können auch ganz oder teilweise bromiert vorliegen.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Diphenole bei der Polycarbonatherstellung sind bevorzugte: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxlyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Bevorzugte Verzweiger sind Triphenole, Trimesinsäure(trichlorid), Cyanursäuretrichlorid und 3,3-Bis-(3-methyl-4-hydroxyphenyl)-2-oxo-2,3-dihydroindol.

Im Sinne der Erfindung ist es zur Erreichung von verbesserten Kunststoffzusammensetzungen möglich, dass zusätzlich noch mindestens ein weiterer in thermoplastischen Kunststoffen, bevorzugt Poly- und Copolycarbonaten, üblicherweise vorhandener Zusatzstoff wie z.B. Stabilisatoren (wie z.B. in EP 0 839 623 A1 oder EP 0 500 496 A1 beschrieben) besonders Thermostabilisatoren, insbesondere organische Phosphite oder Phosphine, beispielhaft und vorzugsweise Triphenylphosphin, Entformungsmittel, beispielhaft und vorzugsweise Fettsäureester des Glycerins oder Tetramethanolmethans, wobei ungesättigte Fettsäure auch ganz oder teilweise epoxidiert sein können, insbesondere Glycerinmonostearat oder Pentaerythrittetrastearat (PETS), Flammschutzmittel, UV-Absorber, beispielhaft und vorzugsweise Hydroxy-Benzotriazole und Hydroxytriazine, Füllmittel, Schaummittel, Farbstoffen, Pigmente, optische Aufheller, Umesterungskatalysatoren und Nukleierungsmittel o.ä. bevorzugt in Mengen von jeweils bis zu 5 Gew.%, bevorzugt 0,01 bis 5 Gew.% bezogen auf die gesamte Mischung, besonders bevorzugt 0,01 Gew.% bis 1 Gew.% bezogen auf die Menge Kunststoff eingearbeitet wird.

Die Einarbeitung der Perfluoralkylsulfonsäuresalze sowie gegebenenfalls der Zusatzstoffe oder Mischungen der Zusatzstoffe erfolgt in allgemein üblicher Weise zum Beispiel vor oder während der Polymerisation oder durch nachträgliches Vermischen mit dem Kunststoff.

Die so erhaltenen Kunststoffzusammensetzungen liegen im allgemeinen in Form von Lösungen Dispersionen, Emulsionen, Stäuben, Pulvern, Granulaten, Plättchen oder Schuppen vor (Formmassen) und werden zur Herstellung von geformten Gegenständen (Formkörper) verwendet.

Geformte Gegenstände sind beispielhaft und vorzugsweise lichtdurchlässige Gegenstände wie beispielhaft und vorzugsweise Lichtstreuscheiben für Kraftfahrzeuge, Linsen wie z.B. Brillengläser, Folien, Bändchen, Platten, Stegplatten, Stegmehrfachplatten, Gefäße, Rohre und sonstige Profile die nach den üblichen Methoden, wie z.B. Heißpressen, Spinnen, Extrudieren oder Spritzgießen hergestellt werden. Die Polymerzusammensetzungen können auch zu Gießfolien verarbeitet werden.

Mögliche Anwendungen der erfindungsgemäßen Kunststoffzusammensetzungen sind:
1. Sicherheitsscheiben, die bekanntlich in vielen Bereichen von Gebäuden, Fahrzeugen und Flugzeugen erforderlich sind, sowie als Schilde von Helmen.
2. Herstellung von Extrusions- und Lösungsfolien für Displays oder Elektromotoren, auch Skifolien.
3. Herstellung von Blaskörpern (siehe beispielsweise US-Patent 2 964 794).
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Zur Herstellung von Ampelgehäusen oder Verkehrsschildern.
6. Zur Herstellung von Schaumstoffen (siehe beispielsweise DE-AS 1 031 507).
7. Zur Herstellung von Fäden und Drähten (siehe beispielsweise DE-AS 1 137 167 und DE-OS 1 785 137).
8. Als transluzente Kunststoffe mit einem Gehalt an Glasfasern für lichttechnische Zwecke (siehe beispielsweise DE-OS 1 554 020).
9. Zur Herstellung von Präzisionsspritzgußteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS2, bezogen auf Gesamtgewicht, enthalten.
10. Optische Anwendungen, wie optische Speicher (CD, DVD), Schutzbrillen oder Linsen für Foto- und Filmkameras (siehe beispielsweise DE-OS 2 701 173).
11. Als Lichtübertragungsträger, insbesondere als Lichtleiterkabel (siehe beispielsweise EP-A1 0 089 801).
12. Als Elektroisolierstoffe für elektrische Leiter und für Steckergehäuse sowie Steckverbinder.
13. Als Trägermaterial für organische Fotoleiter.
14. Zur Herstellung von Leuchten, z. B. Scheinwerferlampen, als sogenannte "head-lamps" oder Streulichtscheiben oder Lampenabdeckungen.
15. Für medizinische Anwendungen, z.B. Oxygenatoren, Dialysatoren.
16. Für Lebensmittelanwendungen, wie z. B. Flaschen, Geschirr und Schokoladenformen.
17. Für Anwendungen im Automobilbereich, wo Kontakt zu Kraftstoffen und Schmiermitteln auftreten kann.
18. Für Sportartikel, wie z. B. Slalomstangen.
19. Für Haushaltsartikel, wie z. B. Küchenspülen und Briefkastengehäuse.
20. Für Gehäuse, wie z. B. Elektroverteilerschränke, Elektrogeräte, Haushaltsgeräte.
21. Bauteile von Haushaltsartikeln, Elektro- und Elektronikgeräten.
22. Zur Herstellung von Motorrad- und Schutzhelmen.
23. Automobilteile, wie Verglasungen, Armaturenbretter, Karosserieteile und Stoßdämpfer.
24. Für sonstige Anwendungen, wie z. B. Stallmasttüren oder Tierkäfige bevorzugt ist dabei die Verwendung der erfindungsgemäßen Kunststoffzusammensetzungen für

1. Sicherheitsscheiben, die bekanntlich in vielen Bereichen von Gebäuden, Fahrzeugen und Flugzeugen erforderlich sind, sowie als Schilde von Helmen.
2. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
3. Optische Anwendungen, wie optische Speicher (CD, DVD), Schutzbrillen oder Linsen für Foto- und Filmkameras (siehe beispielsweise DE-OS 2 701 173).
4. Für Gehäuse, wie z.B. Elektroverteilerschränke, Elektrogeräte, Haushaltsgeräte.
5. Zur Herstellung von Leuchten, z.B. Scheinwerferlampen, als sogenannte "head-lamps" oder Streulichtscheiben oder Lampenabdeckungen.
6. Zur Herstellung von Motorrad- und Schutzhelmen.

Von Interesse ist auch die Verwendung der erfindungsgemäßen Kunststoffzusammensetzung zur Herstellung von Mehrschichtsystemen. Hierbei wird die erfindungsgemäßen Kunststoffzusammensetzung in dünner Schicht auf einen geformten Gegenstand aus einem Kunststoff welcher nicht antistatisch ausgerüstet ist, aufgebracht. Das Aufbringen kann zugleich mit oder unmittelbar nach der Formgebung des Formkörpers geschehen, zum Beispiel durch Coextrusion oder Mehrkomponentenspritzguß. Das Aufbringen kann aber auch auf den fertig geformten Grundkörper geschehen, z.B. durch Lamination mit einem Film oder durch Beschichtung mit einer Lösung

Bevorzugt werden Perfluoralkylsulfonsäureammoniumsalze enthaltende Kunststoffzusammensetzungen zur Herstellung von Lichtstreuscheiben für Kraftfahrzeuge verwendet.

Von besonderem Interesse ist auch die Verwendung von Perfluoralkylsulfonsäuresalze enthaltende Kunststoffzusammensetzungen zur Herstellung von Platten, Stegdoppelplatten, Coexplatten und Folien. Ferner ist von Interesse die Verwendung der erfindungsgemäßen Perfluoralkylsulfonsäuresalze in flammgeschützten thermoplastischen Formmassen.

Der Vorteil der mit den erfindungsgemäßen Antistatika ausgerüsteten Kunststoffformkörper ist, dass diese sich nicht mehr, z. B. bei der Herstellung, beim Abziehen der üblicherweise verwendeten Schutzfolien oder Transport und Lagerung, elektrostatisch aufladen.

Die erfindungsgemäßen Perfluoralkylsulfonsäureammoniumsalze sind besonders geeignet für transparente Einstellungen der Thermoplasten, doch lassen sich auch gedeckte Einstellungen mit Hilfe dieser Zusätze antistatisch ausrüsten.

Die erfindungsgemäßen Kunststoffzusammensetzungen lassen sich auch über sogenannte "Masterbatches" erhalten, in denen die gewünschte Additivzusammensetzung bereits vorgemischt sind. Entsprechend der gewünschten Zusammensetzung des Kunststoffes werden dann nur noch entsprechende Mengen dieses Masterbatches dem Polycarbonat zugesetzt, beispielsweise bei der Compoundierung oder vor dem Verspritzen.

Die nachfolgenden Beispiele dienen zur Erläuterung der Erfindung. Die Erfindung ist nicht auf die Beispiele beschränkt. Prozentangaben bedeuten im folgenden Gewichtsprozente.

### Beispiele

### Staubtest

Um die Staubanlagerung im Laborversuch zu untersuchen, werden die gespritzten Platten einer Atmosphäre mit aufgewirbeltem Staub ausgesetzt. Dazu wird ein 2-1-Becherglas mit einem 80 mm langen Magnetrührstab mit dreieckigem Querschnitt mit Staub (Kohlenstaub / 20 g Aktivkohle, Riedel-de Haen, Seelze, Deutschland, Artikel Nr. 18003) ca. 1 cm hoch gefüllt. Mit Hilfe eines Magnetrührers wird der Staub aufgewirbelt. Nach dem Stoppen des Rührers wird der Probekörper 7 sec lang dieser Staubatmosphäre ausgesetzt. Je nach verwendetem Probekörper setzt sich mehr oder weniger Staub auf den Probekörpern ab.

Die Beurteilung der Staubanlagerungen (Staubfiguren) wird visuell durchgeführt. Platten welche Staubfiguren aufwiesen wurden negativ (-) bewertet, praktisch staubfigurenfreie Platten mit (+) bewertet.

### Beispiel 1

6,25 g Neopentylamin, 28 g Tributylamin und 22 g DMF werden in einem 500 ml Dreihalskolben vorgelegt. Zu dieser Mischung werden 40.8 g Methyljodid zusammen mit 14 ml DMF zugetropft und noch 12 h bei Raumtemperatur gerührt. Die Lösung wird in Essigester gefällt und getrocknet. Man erhält 2.4 g farblose Kristalle. Neopentylamin ist bei Pfaltz & Bauer, Waterbury, CT, USA erhältlich.

### Beispiel 2

9.6 g der Verbindung aus Beispiel 1 wird in 96 ml Wasser gelöst und über eine Säule gefüllt mit 260 g Lewatit M 500 in Hydroxy-Form gegeben. Die erhaltene Lösung wird mit Perfluoroctansulfonsäure (Fluka) neutralisiert und zur Trockene eingeengt. Man erhält Perfluorbutansulfonsäuretrimethyl-neopentylammoniumsalz.

### Beispiel 3

Perfluorbutansulfonsäuretrimethylphenylammoniumsalz wird durch Neutralisation der Perfluorbutansulfonsäure und des Trimethylphenyl-ammoniumhydroxids in wässriger Lösung hergestellt. Die Perfluorbutansulfonsäure lässt sich durch Einwirken von konzentrierter Schwefelsäure auf das Kaliumsalz der Sulfonsäure freisetzen und durch Destillation isolieren. Das Kaliumsalz ist bei Aldrich erhältlich. Trimethylphenylammoniumhydroxid lässt sich aus Trimethylphenyl-ammoniumchlorid (Aldrich) mittels Ionenaustausch über den Anionenaustauscher Lewatit^{®} 500 (Bayer AG) herstellen.

### Beispiel 4

Perfluorbutansulfonsäurebenzyltrimethylammoniumsalz wird durch Neutralisation der Perfluorbutansulfonsäure und des Benzyltrimethyl-ammoniumhydroxids in wässriger Lösung hergestellt. Benzyltrimethylammoniumhydroxid ist bei Aldrich erhältlich.

### Beispiel 5

Perfluorbutansulfonsäuretetramethylammoniumsalz wird durch Neutralisation der Perfluorbutansulfonsäure und des Tetramethylammoniumhydroxids in wässriger Lösung hergestellt. Tetramethylammoniumhydroxid ist bei Aldrich erhältlich.

### Beispiel 6

Perfluorbutansulfonsäuretetrapropylammoniumsalz wird durch Neutralisation der Perfluorbutansulfonsäure und des Tetrapropylammoniumhydroxids in wässriger Lösung hergestellt. Tetrapropylammoniumhydroxids ist bei Aldrich erhältlich.

### Beispiel 7

Perfluorbutansulfonsäuretetrahexylammoniumsalz wird durch Neutralisation der Perfluorbutansulfonsäure und des Tetrahexylammoniumhydroxids in wässriger Lösung hergestellt. Tetrahexylammoniumhydroxids ist bei Fluka erhältlich.

### Beispiel 8 Herstellung von Probekörper

Zur Herstellung der Probekörper wird ein additivfreies, unstabilisiertes Polycarbonat (Makrolon^{®} 2808 der Bayer AG, Leverkusen) mit einem mittleren Molekulargewicht von ca. 30 000 (M_{W} nach GPC), Lösungsviskosität: η=1,293 bei 290-300°C auf einem Zweiwellenextuder mit der in Tabelle 1 angegebenen Menge von Sulfonsäuresalzen (gemäß Beispiel 2-7) sowie den anderen angegebenen Zusatzstoffen kompoundiert und anschließend granuliert.

Aus diesem Granulat werden anschließend Rechteckplatten bei 300 oder 320 °C Massetemperaturen abgespritzt (155 mm x 75 mm x 2 mm). Anschließend wird die Farbe der Rechteckplatten visuell gegen parallel hergestellte Rechteckplatten ohne den erfindungsgemäßen Sulfoniumsalzen (Beispiel 8.1) verglichen. Schließlich werden die Rechteckplatten dem Staubtest unterzogen. Die Ergebnisse sind in Tabelle 2 angegeben.

**Tabelle 1: Kunststoffzusammensetzungen**

| **Beispiel** | **Zusammensetzung** | **Massetemperatur Verspritzen** |
|---|---|---|
| 8.1 | 0.025 % Triphenylphosphin + 0.3 % 2-(2'-Hydroxy-3'-(2-butyl)-5'-(tert-butyl)-phenyl)-benzotriazol | 300 |
| 8.2 | 0.3 % Perfluoroctansulfonsäuretetramethyl-ammoniumsalz + 0.025 % Triphenylphosphin + 0.3 % 2-(2'-Hydroxy-3'-(2-butyl)-5'-(*tert*-butyl)-phenyl)-benzotriazol | 320 |
| 8.3 | 0.4 % Perfluoroctansulfonsäuretetraetylammonium-salz (Bayowet 248^{®}, Bayer AG, Leverkusen)+ 0.025 % Triphenylphosphin + 0.3 % 2-(2'-Hydroxy-3'-(2-butyl)-5'-(*tert*-butyl)-phenyl)-benzotriazol (Tinuvin^{®} 350, Ciba Spezialitätenchemie, Basel) | 300 |
| 8.4 | 0.3 % Perfluorbutansulfonsäuretetrapropyl-ammoniumsalz + 0.04 % Triphenylphosphin + 0.3 % 2-(2'-Hydroxy-3'-(2-butyl)-5'-(*tert*-butyl)-phenyl)-benzotriazol | 300 |
| 8.5 | 0.3 % Perfluorbutansulfonsäuretetrabutylammonium-salz (Fluka) + 0.04 % Triphenylphosphin + 0.3 % 2-(2'-Hydroxy-3'-(2-butyl)-5'-(*tert*-butyl)-phenyl)-benzotriazol | 300 |
| 8.6 | 0.4 % Perfluorbutansulfonsäuretetrahexylammonium-salz + 0.04 % Triphenylphosphin + 0.3 % 2-(2'-Hydroxy-3'-(2-butyl)-5'-(*tert*-butyl)-phenyl)-benzotriazol | 320 |
| 8.7 | 1 % Perfluorbutansulfonsäuretrimethylneopentyl-ammo-niumsalz + 0.025 % Triphenylphosphin + 0.3 % 2-(2'-Hydroxy-3'-(2-butyl)-5'-(*tert*-butyl)-phenyl)-benzotriazol | 300 |
| 8.8 | 0.3 % Perfluorbutansulfonsäurebenzyltrimethyl-ammo-niumsalz + 0.025 % Triphenylphosphin + 0.3 % 2-(2'-Hydroxy-3'-(2-butyl)-5'-(*tert*-butyl)-phenyl)-benzotriazol | 300 |
| 8.9 | 1 % Perfluorbutansulfonsäuretrimethylphenyl-ammonium-salz + 0.025 % Triphenylphosphin + 0.3 % 2-(2'-Hydroxy-3'-(2-butyl)-5'-(*tert*-butyl)-phenyl)-benzotriazol | 300 |

**Tabelle 2: Ergebnisse des Staubtestes und der optischen Bemusterung**

| **Beispiel** | **Ergebnis des Staubtests** | **Farbveränderung gegenüber Beispiel 8.1** |
|---|---|---|
| 8.1 | - | - |
| 8.2 | - | keine Veränderung, leichte Trübung |
| 8.3 | + | gelblicher |
| 8.4 | + | keine Veränderung |
| 8.5 | + | keine Veränderung |
| 8.6 | + | keine Veränderung |
| 8.7 | + | keine Veränderung |
| 8.8 | + | gelblicher |
| 8.9 | + | gelblicher |

Die Ergebnisse in Tabelle 2 zeigen, dass nur die erfindungsgemäßen Sulfoniumsalze gegenüber herkömmlichen Sulfoniumsalzen sowohl antistatisch wirken im Sinne von keiner Staubanlagerung nach dem Verspritzen, als auch keine zusätzliche Vergilbung bei der Verarbeitung zeigen.

### Beispiel 9

30,2 g Perfluorbutansulfonylfluorid (0,1 mol, Aldrich) und 6,0 g Dimethyldimethoxysilan (0,05 mol, Fluka) werden in 70 ml trockenem tert-Butylmethylether (Aldrich) in einem 250 ml Dreihalskolben vorgelegt und unter Stickstoff bei Raumtemperatur langsam mit 14,3 g Tripropylamin (0,1 mol, Aldrich) versetzt. Die Reaktionslösung wird anschließend für 3 h am Rückfluß erwärmt und schließlich wird das ausgefallene Produkt abfiltriert, mit Ether gewaschen und getrocknet. Ausbeute 32,6 g weißer Feststoff von N-Methyl-tripropylammoniumperfluorbutylsulfonat.

### Beispiel 10

30,2 g Perfluorbutansulfonylfluorid (0,1 mol, Aldrich) und 8,8 g Diethyldiethoxysilan (0,05 mol, Fluka) werden in 70 ml trockenem tert-Butylmethylether (Aldrich) in einem 250 ml Dreihalskolben vorgelegt und unter Stickstoff bei Raumtemperatur langsam mit 14,3 g Tripropylamin (0,1 mol, Aldrich) versetzt. Die Reaktionslösung wird anschließend für 3 h am Rückfluß erwärmt und schließlich wird das ausgefallene Produkt abfiltriert, mit Ether gewaschen und getrocknet. Ausbeute 8 g weißer Feststoff von N-Ethyl-tripropylammoniumperfluorbutylsulfonat.

### Beispiel 11

30,2 g Perfluorbutansulfonylfluorid (0,1 mol, Aldrich) und 7,3 g Methyltripropoxysilan (0,033 mol, Aldrich) werden in 70 ml trockenem tert-Butylmethylether (Aldrich) in einem 250 ml Dreihalskolben vorgelegt und unter Stickstoff bei Raumtemperatur langsam mit 14,3 g Tripropylamin (0,1 mol, Aldrich) versetzt. Die Reaktionslösung wird anschließend für 8 h bei Raumtemperatur gerührt und schließlich wird das ausgefallene Produkt abfiltriert, mit Ether gewaschen und getrocknet. Ausbeute 19,3 g weißer Feststoff von Tetrapropylammoniumperfluorbutylsulfonat.

### Beispiel 12

30,2 g Perfluorbutansulfonylfluorid (0,1 mol, Aldrich) und 6,0 g Dimethyldimethoxysilan (0,05 mol, Fluka) werden in 100 ml trockenem Cyclohexan (Aldrich) in einem 250 ml Dreihalskolben vorgelegt und unter Stickstoff bei Raumtemperatur langsam mit 11,52 g N,N-Diisopropylmethylamin (0,1 mol, Fluka) versetzt. Die Reaktionslösung wird anschließend für 7 h bei Raumtemperatur gerührt und schließlich wird das ausgefallene Produkt abfiltriert, mit Hexan und tert-Butylmethylether gewaschen und getrocknet. Ausbeute 14,4 g weißer Feststoff von Dimethyldiisopropylammoniumperfluorbutylsulfonat.

### Beispiel 13

30,2 g Perfluorbutansulfonylfluorid (0,1 mol, Aldrich) und 6,0 g Dimethyldimethoxysilan (0,05 mol, Fluka) werden in 100 ml trockenem Cyclohexan (Aldrich) in einem 250 ml Dreihalskolben vorgelegt und unter Stickstoff bei Raumtemperatur langsam mit 18,4 g Tributylamin (0,1 mol, Aldrich) versetzt. Die Reaktionslösung wird anschließend für 4 h bei Raumtemperatur gerührt, dann 1 h am Rückfluß erwärmt und schließlich wird das ausgefallene Produkt abfiltriert, mit Ether gewaschen und getrocknet. Ausbeute 6,5 g weißer Feststoff von N-Methyl-tributylammoniumperfluorbutylsulfonat.

### Beispiel 14

30,2 g Perfluorbutansulfonylfluorid (0,1 mol, Aldrich) und 6,0 g Dimethyldimethoxysilan (0,05 mol, Fluka) werden in 70 ml trockenem tert-Butylmethylether (Aldrich) in einem 250 ml Dreihalskolben vorgelegt und unter Stickstoff bei Raumtemperatur langsam mit 15,5 g N,N-Diethylcyclohexylamin (0,1 mol, Aldrich) versetzt. Die Reaktionslösung wird anschließend für 1 h bei Raumtemperatur gerührt, dann 3 h am Rückfluß erwärmt und schließlich wird das ausgefallene Produkt abfiltriert, mit Ether gewaschen und getrocknet. Ausbeute 40 g weißer Feststoff von Cyclohexyldiethylmethylammoniumperfluorbutylsulfonat.

### Beispiel 15

30,2 g Perfluorbutansulfonylfluorid (0,1 mol, Aldrich) und 6,0 g Dimethyldimethoxysilan (0,05 mol, Fluka) werden in 70 ml trockenem tert-Butylmethylether (Aldrich) in einem 250 ml Dreihalskolben vorgelegt und unter Stickstoff bei Raumtemperatur langsam mit 12,7 g N,N-Dimethylcyclohexylamin (0,1 mol, Aldrich) versetzt. Die Reaktionslösung wird anschließend für 8 h bei Raumtemperatur gerührt und schließlich wird das ausgefallene Produkt abfiltriert, mit Ether gewaschen und getrocknet. Ausbeute 39 g weißer Feststoff von Cyclohexyltrimethylammoniumperfluorbutylsulfonat.

### Beispiel 16

30,2 g Perfluorbutansulfonylfluorid (0,1 mol, Aldrich) und 6,0 g Dimethyldimethoxysilan (0,05 mol, Fluka) werden in 100 ml trockenem tert-Butylmethylether (Aldrich) in einem 250 ml Dreihalskolben vorgelegt und unter Stickstoff bei Raumtemperatur langsam mit 8,7 g N,N-Dimethylisopropylamin (0,1 mol, Aldrich) versetzt. Die Reaktionslösung wird anschließend für 8 h bei Raumtemperatur gerührt und schließlich wird das ausgefallene Produkt abfiltriert, mit Ether gewaschen und getrocknet. Ausbeute 33 g weißer Feststoff von Isopropyltrimethylammoniumperfluorbutylsulfonat.

### Beispiel 17

30,2 g Perfluorbutansulfonylfluorid (0,1 mol, Aldrich) und 6,0 g Dimethyldimethoxysilan (0,05 mol, Fluka) werden in 100 ml trockenem tert-Butylmethylether (Aldrich) in einem 250 ml Dreihalskolben vorgelegt und unter Stickstoff bei Raumtemperatur langsam mit 19,5 g N,N-Methyldicyclohexylamin (0,1 mol, Aldrich) versetzt. Die Reaktionslösung wird anschließend für 8 h bei Raumtemperatur gerührt und schließlich wird das ausgefallene Produkt abfiltriert, mit Ether gewaschen und getrocknet. Ausbeute 38 g weißer Feststoff von Dicyclohexyldimethylammoniumperfluorbutylsulfonat.

### Beispiel 18

212,5 g Perfluorbutansulfonylfluorid (0,7 mol, Aldrich) und 42,2 g Dimethyldimethoxysilan (0,35 mol, Fluka) werden in 490 ml trockenem tert-Butylmethylether (Aldrich) in einem 1000 ml Dreihalskolben vorgelegt und unter Stickstoff bei Raumtemperatur langsam mit 91 g N,N-Diisopropylethylamin (0,7 mol, Aldrich) versetzt. Die Reaktionslösung wird anschließend für 8 h bei Raumtemperatur gerührt und schließlich wird das ausgefallene Produkt abfiltriert, mit Ether gewaschen und getrocknet. Ausbeute 159 g weißer Feststoff von Methylethyldiisopropylammoniumperfluorbutylsulfonat.

### Beispiel 19

Analog Bsp. 8 werden Rechteckplatten durch Kompoundierung und anschließenden Spritzguß gemäß Tabelle 3 hergestellt und dem Staubtest unterworfen. Die Ergebnisse sind in Tabelle 4 zusammengestellt:

**Tabelle 3: Kunststoffzusammensetzungen**

| Beispiel | Zusammensetzung | Massetemperatur Verspritzen |
|---|---|---|
| 19.1 | 0.05 % Triphenylphosphin + 0.3 % 2-(2'-Hydroxy-3'-(2-butyl)-5'-(*tert*-butyl)-phenyl)-benzotriazol (Tinuvin^{®} 350, Ciba Spezialitätenchemie, Basel)+ 0,05 % Octadecyl-3-(3',5'-di-*tert*-butyl-4'-hydroxyphenyl)-propionat (Irganox 1076, Ciba Spezialitätenchemie, Basel) + 0,3 % N-Methyl-tripropylammoniumperfluorbutylsulfonat (Bsp.9) | 320 |
| 19.2 | 0.04 % Triphenylphosphin + 0.3 % 2-(2'-Hydroxy-3'-(2-butyl)-5'-(tert-butyl)-phenyl)-benzotriazol + 0,4 % N-Ethyl-tripropylammoniumperfluorbutylsulfonat (Bsp.10) | 300 |
| 19.3 | 0.05 % Triphenylphosphin + 0.3 % 2-(2'-Hydroxy-3'-(2-butyl)-5'-(*tert*-butyl)-phenyl)-benzotriazol + 0,1 % Dimethyldiisopropylammonium-perfluorbutylsulfonat (Bsp. 12) | 310 |
| 19.4 | 0.05 % Triphenylphosphin + 0.3 % 2-(2'-Hydroxy-3'-(2-butyl)-5'-(tert-butyl)-phenyl)-benzotriazol + 0,2 % N-Methyl-tributylammonium-perfluorbutylsulfonat (Bsp. 13) | 320 |
| 19.5 | 0.05 % Triphenylphosphin + 0.3 % 2-(2'-Hydroxy-3'-(2-butyl)-5'-(*tert*-butyl)-phenyl)-benzotriazol + 0,2 % Cyclohexyldiethylmethylammonium-perfluorbutylsulfonat (Bsp. 14) | 300 |
| 19.6 | 0.05 % Triphenylphosphin + 0.3 % 2-(2'-Hydroxy-3'-(2-butyl)-5'-(*tert*-butyl)-phenyl)-benzotriazol + 0,3 % Cyclohexyltrimethylammoniumperfluorbutylsulfona t (Bsp. 15) | 320 |
| 19.7 | 0.05 % Triphenylphosphin + 0.3 % 2-(2'-Hydroxy-3'-(2-butyl)-5'-(*tert*-butyl)-phenyl)-benzotriazol + 0,05 % Oetadecyl-3-(3',5'-di-*tert*-butyl-4'-hydroxyphenyl)-propionat + 0,5 % Tetrabutylammoniumtrifluormethansulfonat (Aldrich) | 300 |
| 19.8 | 0.05 % Triphenylphosphin + 0.3 % 2-(2'-Hydroxy-3'-(2-butyl)-5'-(*tert*-butyl)-phenyl)-benzotriazol + 0,3 % Isopropyltrimethylammoniumperfluorbutylsulfonat (Bsp. 16) | 320 |
| 19.9 | 0.05 % Triphenylphosphin + 0.3 % 2-(2'-Hydroxy-3'-(2-butyl)-5'-(*tert*-butyl)-phenyl)-benzotriazol + 0,3 % Dicyclohexyldimethylammoniumperfluorbutylsulfon at (Bsp. 17) | 320 |
| 19.10 | 0.05 % Triphenylphosphin + 0.3 % 2-(2'-Hydroxy-3'-(2-butyl)-5'-(*tert*-butyl)-phenyl)-benzotriazol + 0,2 % Methylethyldiisopropylammoniumperfluor-butylsulfonat (Bsp. 18) | 320 |

**Tabelle 4: Ergebnisse des Staubtestes und der optischen Bemusterung**

| Beispiel | Ergebnis des Staubtests | Farbveränderung gegenüber Beispiel 8.1 |
|---|---|---|
| 19.1 | + | keine Veränderung |
| 19.2 | + | leicht gelblicher |
| 19.3 | + | keine Veränderung |
| 19.4 | + | keine Veränderung |
| 19.5 | + | keine Veränderung |
| 19.6 | + | keine Veränderung |
| 19.7 | + | leicht gelblicher |
| 19.8 | + | keine Veränderung |
| 19.9 | + | keine Veränderung |
| 19.10 | + | keine Veränderung |

Die Ergebnisse in Tabelle 4 zeigen, dass die erfindungsgemäßen Sulfoniumsalze gegenüber herkömmlichen Sulfoniumsalzen sowohl antistatisch wirken im Sinne von keiner Staubanlagerung nach dem Verspritzen, als auch keine zusätzliche Vergilbung bei der Verarbeitung zeigen.

### Beispiel 20

Makrolon 2808 wird mit 0.05 % Triphenylphosphin, 0.3 % 2-(2'-Hydroxy-3'-(2-butyl)-5'-(*tert*-butyl)-phenyl)-benzotriazol, 0,1 % Octadecyl-3-(3',5'-di-*tert*-butyl-4'-hydroxyphenyl)-propionat und 1,5 % Dimethyldiisopropylammonium-perfluorbutylsulfonat (Bsp. 12) wie in Beispiel 8 beschrieben kompoundiert.

### Beispiel 21

Das Granulat aus Beispiel 20 wird mit Granulat des Polycarbonattyps Makrolon Al2647 der Bayer AG gemäß Tabelle 5 durch Schütteln gemischt, zu Rechteckplatten analog Bsp. 8 verspritzt und dem Staubtest unterworfen.

**Tabelle 5: Zusammensetzung der Rechteckplatten und Staubtest**

| Beispiel | Granulat Beispiel 20 | Makrolon Al2647 | Massetemperatur Verspritzen | Ergebnis des Staubtests |
|---|---|---|---|---|
| 21.1 | 0 % | 100% | 320 | - |
| 21.2 | 6,7 % | 93,3 % | 320 | + |
| 21.3 | 10 % | 90% | 320 | + |
| 21.4 | 13,3 % | 86,7 % | 300 | + |

Tabelle 5 zeigt, daß sich erfindungsgemäße Formmassen auch mit Hife eines Antistatikkonzentrats (Vormischung, "Masterbatch") herstellen lassen.

## Patentansprüche

1. Verwendung der folgenden quaternären Ammoniumsalze zur antistatischen Ausrüstung von Kunststoffen:
Perfluoroctansulfonsäuretetrapropylammoniumsalz,
Perfluorbutansulfonsäuretetrapropylammoniumsalz,
Perfluoroctansulfonsäuretetrabutylammoniumsalz,
Perfluorbutansulfonsäuretetrabutylammoniumsalz,
Perfluoroctansulfonsäuretetrapentylammoniumsalz,
Perfluorbutansulfonsäuretetrapentylammoniumsalz,
Perfluoroctansulfonsäuretetrahexylammoniumsalz,
Perfluorbutansulfonsäuretetrahexylammoniumsalz,
N-Methyl-tripropylammoniumperfluorbutylsulfonat,
N-Ethyl-tripropylammoniumperfluorbutylsulfonat,
Tetrapropylammoniumperfluorbutylsulfonat,
Dimethyldiisopropylammoniumperfluorbutylsulfonat,
N-Methyl-tributylammoniumperfluorbutylsulfonat,
Cyclohexyldiethylmethylammoniumperfluorbutylsulfonat,
Cyclohexyltrimethylammoniumperfluorbutylsulfonat,
N-Methyl-tripropylammoniumperfluoroctylsulfonat,
N-Ethyl-tripropylammoniumperfluoroctylsulfonat,
Tetrapropylammoniumperfluoroctylsulfonat,
Dimethyldiisopropytammoniumperfluoroctylsulfonat,
N-Methyl-tributylammoniumperfluoroctylsulfonat,
Cyclohexyldiethylmethylammoniumperfluoroctylsulfonat,
Cyclohexyltrimethylammoniumperfluoroctylsulfonat
allein oder Mischungen davon.

2. Verwendung der folgenden quaternären Ammoniumsalze gemäß Anspruch 1:
N-Methyltripropylammoniumperfluorobutylsulfonate,
N-Ethyltripropylammoniumperfluorobutylsulfonate,
Dimethyldiisopropylammoniumperfluorobutylsulfonate,
Methylethyldiisopropylammoniumperfluorobutylsulfonate,
N-Methyltributylammoniumperfluorbutylsulfonat, allein oder Mischungen davon.

3. Verwendung von quaternäre Ammoniumsalzen gemäß Anspruch 1 zur antistatischen Ausrüstung von Polycarbonat oder Copolycarbonatzusammensetzungen

4. Kunststoffzusammensetzungen enthaltend mindestens ein quaternäres Ammoniumsalz gemäß Anspruch 1 oder Anspruch 2.

5. Kunststoffzusammensetzung gemäß Anspruch 4, wobei der Kunststoff Polycarbonat oder Copolycarbonat ist.

6. Verfahren zur Herstellung von Kunststoffzusammensetzungen wie in Anspruch 4 definiert, **dadurch gekennzeichnet, dass** man vor, während oder nach der Polymerisation der Kunststoffe mindestens ein quaternäres Ammoniumsalz einer Perfluoralkylsulfonsäure zusetzt.

7. Verwendung von quaternären Ammoniumsalzen gemäß Anspruch 1 enthaltenden Kunststoffzusammensetzungen zur Herstellung von Formkörpern.

8. Verfahren zur Herstellung von antistatisch wirkenden Formkörpern, **dadurch gekennzeichnet, dass** man mindestens eine Kunststoffzusammensetzung wie in Anspruch 4 definiert als Ausgangsmaterialien einsetzt.

9. Kunststoffformkörper enthaltend mindestens ein quaternäres Ammoniumsalz gemäß Anspruch 1.

## Claims

1. Use of the following quaternary ammonium salts for providing plastics materials with antistatic properties:
perfluorooctanesulfonic acid tetrapropylammonium salt, perfluorobutanesulfonic acid tetrapropylammonium salt, perfluorooctanesulfonic acid tetrabutylammonium salt, perfluorobutanesulfonic acid tetrabutylammonium salt, perfluorooctanesulfonic acid tetrapentylammonium salt, perfluorobutanesulfonic acid tetrapentylammonium salt, perfluorooctanesulfonic acid tetrahexylammonium salt, perfluorobutanesulfonic acid tetrahexylammonium salt, N-methyl-tripropylammonium perfluorobutylsulfonate, N-ethyl-tripropylammonium perfluorobutylsulfonate, tetrapropylammonium perfluorobutylsulfonate, dimethyldiisopropylammonium perfluorobutylsulfonate, N-methyl-tributylammonium perfluorobutylsulfonate, cyclohexyldiethylmethylammonium perfluorobutylsulfonate,
cyclohexyltrimethylammonium perfluorobutylsulfonate, N-methyl-tripropylammonium perfluorooctylsulfonate, N-ethyl-tripropylammonium perfluorooctylsulfonate, tetrapropylammonium perfluorooctylsulfonate, dimethyldiisopropylammonium perfluorooctylsulfonate, N-methyl-tributylammonium perfluorooctylsulfonate, cyclohexyldiethylmethylammonium perfluorooctylsulfonate,
cyclohexyltrimethylammonium perfluorooctylsulfonate, alone or mixtures thereof.

2. Use of the following quaternary ammonium salts according to claim 1:
N-methyltripropylammonium perfluorobutylsulfonate, N-ethyltripropylammonium perfluorobutylsulfonate, dimethyldiisopropylammonium perfluorobutylsulfonate, methylethyldiisopropylammonium perfluorobutylsulfonate,
N-methyltributylammonium perfluorobutylsulfonate, alone or mixtures thereof.

3. Use of quaternary ammonium salts according to claim 1 for providing polycarbonate or copolycarbonate compositions with antistatic properties.

4. Plastics compositions comprising at least one quaternary ammonium salt according to claim 1 or claim 2.

5. Plastics composition according to claim 4, wherein the plastics material is polycarbonate or copolycarbonate.

6. Process for the production of plastics compositions as defined in claim 4, **characterised in that** at least one quaternary ammonium salt of a perfluoroalkylsulfonic acid is added before, during or after the polymerisation of the plastics materials.

7. Use of plastics compositions comprising quaternary ammonium salts according to claim 1 in the production of moulded bodies.

8. Method for producing mouldings having an antistatic effect, **characterised in that** at least one plastics composition as defined in claim 4 is used as starting material.

9. Plastics mouldings comprising at least one quaternary ammonium salt according to claim 1.

## Revendications

1. Utilisation des sels d'ammonium quaternaire suivants pour un équipement antistatique de matières plastiques :
perfluorooctanesulfonate de tétrapropylammonium,
perfluorobutanesulfonate de tétrapropylammonium,
perfluorooctanesulfonate de tétrabutylammonium,
perfluorobutanesulfonate de tétrabutylammonium,
perfluorooctanesulfonate de tétrapentylammonium,
perfluorobutanesulfonate de tétrapentylammonium,
perfluorooctanesulfonate de tétrahexylammonium,
perfluorobutanesulfonate de tétrahexylammonium,
perfluorobutylsulfonate de N-méthyl-tripropylammonium,
perfluorobutylsulfonate de N-éthyl-tripropylammonium,
perfluorobutylsulfonate de tétrapropylammonium,
perfluorobutylsulfonate de diméthyldiisopropylammonium,
perfluorobutylsulfonate de N-méthyl-tributylammonium,
perfluorobutylsulfonate de cyclohexyldiéthylméthylammonium,
perfluorobutylsulfonate de cyclohexyltriméthylammonium,
perfluorooctylsulfonate de N-méthyl-tripropylammonium,
perfluorooctylsulfonate de N-éthyl-tripropylammonium,
perfluorooctylsulfonate de tétrapropylammonium,
perfluorooctylsulfonate de diméthyldiisopropylammonium,
perfluorooctylsulfonate de N-méthyl-tributylammonium,
perfluorooctylsulfonate de cyclohexyldiéthylméthylammonium,
perfluorooctylsulfonate de cyclohexyltriméthylammonium
seuls ou en mélange de ceux-ci.

2. Utilisation des sels d'ammonium quaternaires suivants selon la revendication 1 :
perfluorobutylsulfonate de N-méthyltripropylammonium,
perfluorobutylsulfonate de N-éthyltripropylammonium,
perfluorobutylsulfonate de diméthyldiisopropylammonium,
perfluorobutylsulfonate de méthyléthyldiisopropylammonium,
perfluorobutylsulfonate de N-méthyltributylammonium,
seuls ou en mélange de ceux-ci.

3. Utilisation de sels d'ammonium quaternaires selon la revendication 1 pour un équipement antistatique de compositions de polycarbonate ou de copolycarbonate.

4. Compositions de matières plastiques contenant au moins un sel d'ammonium quaternaire selon la revendication 1 ou la revendication 2.

5. Compositions de matières plastiques selon la revendication 4, la matière plastique étant du polycarbonate ou du copolycarbonate.

6. Procédé pour la préparation de compositions de matières plastiques comme défini dans la revendication 4, **caractérisé en ce que** l'on ajoute avant, pendant ou après la polymérisation des matières plastiques au moins un sel d'ammonium quaternaire d'un acide perfluoroalkylsulfonique.

7. Utilisation de compositions de matières plastiques contenant des sels d'ammonium quaternaires selon la revendication 1 pour la préparation de corps moulés.

8. Procédé pour la préparation de corps moulés ayant une action antistatique, **caractérisé en ce que** l'on utilise au moins une composition de matière plastique comme défini dans la revendication 4 comme matériau de départ.

9. Corps moulés en matière plastique contenant au moins un sel d'ammonium quaternaire selon la revendication 1.
